# EUROPÄISCHE PATENTSCHRIFT

(11) **EP 1 495 996 B1**
(45) Veröffentlichungstag und Bekanntmachung des Hinweises auf die Patenterteilung: **15.08.2007**
(21) Anmeldenummer: 04015451.0
(22) Anmeldetag: 01.07.2004
(51) Int. Cl.: B65G 17/08, B65G 21/22

(54) **Scharnierbandkette mit Führungsvorrichtung**
Slat conveyor chain with guide device
Convoyeur à charnieres avec dispositif de guidage

(30) Priorität: 05.07.2003 DE 20310360 U
(43) Veröffentlichungstag der Anmeldung: 12.01.2005
(73) Patentinhaber: SCHÜCO International KG, 33609 Bielefeld (DE)
(72) Erfinder: Kuhlmann, Jürgen, 49326 Melle (DE)
(74) Vertreter: Dantz, Jan Henning

(56) Entgegenhaltungen:
- EP-A- 0 333 309
- US-A- 4 436 200
- US-A- 4 742 907
- US-A- 5 634 550
- US-A- 6 089 379
- US-A1- 2003 019 730

## Beschreibung

Die Erfindung betrifft eine Scharnierbandkette mit Führungsvorrichtung nach dem Oberbegriff des Anspruchs 1.

Im Anlagenbau und der Fördertechnik unterscheidet man zwei Arten von Transportketten: Kardangelenkketten und Scharnierbandketten.

Kardangelenkketten sind Ketten, bei denen die einzelnen Kettenglieder im Zentrum mittig unter einer Transportfläche kardanisch miteinander gekoppelt sind. Kardanische Ketten haben den Vorteil, dass sie in einem bestimmten Breitenbereich der Kettenauflagefläche einem immer gleichbleibenden Radius folgen können, der aber dazu führt, dass die Auflagesegmente entsprechend dem Radius ausgeformt sein müssen, d. h., sich zu den Enden hin verjüngen, wodurch im jeweiligen Außenbogen Öffnungen entstehen, die ein Sicherheitsrisiko sowohl für Bedienungspersonal als auch für Transportgut bildet. Hier sind dann aufwendige Ausformungen vorzunehmen, wie z. B. Verzahnungen der Auflageflächen oder aber entsprechende Unterfütterungen, die wiederum übereinander greifen.

Scharnierbandketten hingegen werden in unterschiedlichen Breiten hergestellt, wobei die einzelnen Kettenglieder mittels mehrfach vorhandener Scharnieraugen wechselseitig ineinander greifen und miteinander durch Scharnierbolzen verbunden sind. Handelt es sich bei den Scharnieraugen um kreisrunde Bohrungen, durch welche die Scharnierbolzen gesetzt werden, so eignen sich diese Ketten ausschließlich für den Geradeauslauf und damit lediglich als gerade Transportketten. Ähnlich zu Förderbändern.

Um bei breiten Scharnierbandketten den Geradeauslauf korrigieren zu können, werden die Schamieraugen in Längsrichtung der Kette zumindest einseitig als Langlöcher ausgebildet. Bei schmaleren Scharnierbandketten ergibt sich damit die Möglichkeit, die Kette nicht nur im Geradeauslauf, sondern auch in einem Radius bzw. Bogen zu führen, wobei der Radius in Abhängigkeit von der Kettenbreite, aber auch von der Länge des Langloches des Scharnierauges abhängt.

Eine Scharnierbandkette dieser Art ist in der DE 693 21 957 T2 bzw. der EP 0 652 843 B 1 beschrieben und abgebildet. Die in dieser Schrift offenbarte Scharnierbandkette weist eine relativ große Breite auf, so dass sich daraus auch nur ein relativ großer Radius ergibt, mit dem diese Kette umgelenkt werden kann. Die jeweiligen Kettenglieder der Scharnierbandkette dieser Schrift weisen gegeneinander gerichtete Vorsprünge - mit Scharnieraugen - auf, wobei die eine Seite der gegeneinander gerichteten Vorsprünge kreisrunde Bohrungen aufweisen, während die entgegengerichteten Vorsprünge mit Langlöchern versehen sind. Im ersten Absatz der Seite 6 der DE 693 21 957 T2 ist auch zu entnehmen, dass die Bohrungen ebenfalls als Langlöcher ausgebildet sein könnten, was aber grundsätzlich deshalb nicht erfolgt, weil zwischen Bohrung und Verbindungsstab Scharnierbolzen eine Presspassung erzielt wird, um über den reinen Kraftschluss den Verbindungsstab in der Bohrung in axialer Richtung festzusetzen.

Im Falle, dass zwischen Verbindungsstab und Bohrung eine lose Passung gewählt wird, werden - so in der DE 32 41 632 C2 - die Verbindungsstäbe kürzer ausgeführt als die maximale Breite der Kette und jeweils endseitig Buchsen eingerastet oder andere formschlusswirkenden Bauteile angeordnet, welche die Bohrung im äußeren Bereich des Kettengliedes verschließen und damit den Verbindungsstab formschlüssig axial festlegen.

Der DE 32 41 632 C2 ist auch zu entnehmen, dass endseitig in die Scharnierachsbohrung ein Dübel eingesetzt wird, welcher hinter einem Schlitz formschlüssig verrastet wird. Bei dieser Verrastung des Dübels ist eine zerstörungsfreie Demontierung des Scharnierbolzens nicht mehr möglich.

Es ist ferner bekannt, nach der Montage des Scharnierbolzens in die Ausnehmung ein entsprechend geformtes Flachformteil einzudrücken, das entweder in eine Ringnut eines Scharnierbolzens eingreift oder dass der Bolzen ebenfalls so kurz geschnitten ist, dass er stirnseitig an dem eingeschobenen Flachteil anliegt. Auch diese Verbindungen sind praktisch unlösbar, insbesondere im eingebauten Zustand einer solchen Kette in einer Förderanlage.

Bei Scharnierbandketten werden die unterhalb der Transportgutauflage angeordneten Führungsausleger zum Eingriff in eine im allgemeinen schienenartige Führungsvorrichtung möglichst weit außen angeordnet und nach innen gerichtet, um dadurch eine breite Führung und hierdurch ein gutes Führungsverhältnis für die Scharnierbandkette zu erhalten.

Um ein Klemmen zu vermeiden, ist es aber notwendig, ein genügendes Spiel in der Führung vorzusehen. Dies bringt wiederum das Problem mit sich, dass es nicht möglich ist, auf einfache Weise eine Revisionsvorrichtung in der Führungsvorrichtung anzuordnen, um beispielsweise ein einzelnes oder mehrere Kettenglieder herausnehmen oder auswechseln zu können, da sich diese über die volle Breite der Schamierbandkette erstrecken muss, um die Führungsausleger, welche in die schienenartige FührungsVorrichtung seitlich eingreifen, herausnehmen zu können.

Eine gattungsgemäße Scharnierbandkette ist aus der US-A-4 7422 907 bekannt. Die Scharnierbandkette dieser Schrift weist zudem nach außen zeigende Führungsausleger auf. Kardangelenkketten mit nach außen zeigenden Führungsauslegern zeigen darüber hinaus die gattungsfremden US 2003/019730 A1 und die US 4 436 200 A.

Ausgehend von dem gattungsgemäßen Stand der Technik löst die Erfindung die Aufgabe, die Scharnierbandkette derart weiterzuentwickeln, dass es möglich ist, die Kette in einfacher Weise zu montieren und zu demontieren, d.h. die Kettenglieder zusammenzufügen und voneinander zu lösen.

Die Erfindung löst diese Aufgabe durch den Gegenstand des Anspruchs 1.

Vorteilhafte Ausgestaltungen der Erfindung sind in den Unteransprüchen angegebenen.

Die Scharnierbolzen sind derart ausgebildet, dass sie durch Verdrehen in eine Verriegelungsstellung bringbar sind, in welcher die axiale Lage der Scharnierbolzen in den Scharnieraugen und deren Drehposition fixiert ist, wobei die Scharnierbolzen durch Rückdrehen aus der Verriegelungsstellung lösbar und dann aus dem Kettenglied ganz oder so weit entnehmbar sind, dass die Kette demontiert werden kann.

Durch diese Maßnahme wird die Verriegelung des Scharnierbolzens an den Kettengliedern in einfachster Weise durch eine Verdrehbewegung realisiert, so dass sowohl die Montage als auch die Demontage ohne größeren Aufwand erfolgen kann.

Vorzugsweise weist der wenigstens eine Scharnierbolzen hierzu wenigstens einen Funktionsvorsprung auf, welcher in einer ersten Drehstellung in axialer Richtung in eine korrespondierend ausgeformte Ausnehmung an den Scharnieraugen einführbar und in einer zweiten Drehstellung in der Ausnehmung axial verriegelbar ist. Es werden also die einzelnen Kettenglieder über Scharnierbolzen verbunden, welche einfachst montier- und demontierbar sind, um, insbesondere zu Service-Zwecken im eingebauten Zustand, einzelne verschlissene Kettenglieder zu tauschen bzw. im Falle einer Reckung der Kettenglieder die Förderbandkette zu kürzen.

Nach Anspruch 7 zeigen die Führungsausleger relativ zur Mittelsenkrechten durch die Scharnierbandkette nach außen und hintergreifen nach innen weisende Schienenabschnitte der Führungsvorrichtung.

Dies gewährleistet, dass die Kettenglieder - welche an sich voneinander lösbar sein müssen - auf einfache Weise aus einer einseitigen Revisionseinrichtung zu Seite hin aus der Scharnierbandkette herausnehmbar sind.

Nach einer weiteren bevorzugten Ausführungsform weist jedes Kettenglied eine Transportgutauflage auf, welche sich seitlich über die Führungsvorrichtung hinaus erstreckt und eine Abdeckung an der Führungsvorrichtung überlappt, welche die Kettenglieder seitlich abdeckt, um einerseits die Sicherheit zu erhöhen und andererseits ein Eindringen von Verschmutzungen zu verhindern.

Nach einer vorteilhaften Variante sind die Scharnierausleger an die Scharnieraugen der einen Reihe von Scharnieraugen angeformt, in welcher die äußeren Scharnieraugen jeweils eine Scharnieraugenbreite nach innen versetzt liegen und zwischen die Scharnieraugen der anderen Scharnieraugenreihe eingreifen.

Nach einer weiteren besonders vorteilhaften Variante ist in der Führungsvorrichtung wenigstens ein Revisionselement angeordnet, welches auf einer bestimmten Länge aus der Schiene bzw. der Führungsvorrichtung herausnehmbar ist, um eine korrespondierende Revisionsöffnung in der Führungsvorrichtung freizugeben, damit die Kette gewartet und insbesondere auch einzelne Kettenglieder herausnehmbar sind. Die Scharnierkettenglieder sind dabei insbesondere so ausgeführt, dass die Scharnierbolzen rechts oder links an einem der Scharnieraugen angeordnet werden können. Die gesamte Kette wird in der Führungsvorrichtung geführt, so dass an bestimmten Stellen die Führung durch die als Einsatzstücke ausgebildeten Revisionselemente verschlossen wird, die als Serviceausnehmungen vorgesehen sind. Werden entsprechende Arbeiten aus Service- oder Verschleißgründen erforderlich, so kann die Führungsvorrichtung an den entsprechenden Revisionsausnehmungen durch Herausnehmen der Revisionselemente geöffnet werden und die entsprechenden schadhaften Kettenglieder entfernt bzw. ausgetauscht werden, ohne dass es erforderlich ist, den gesamten Kettentrieb zu demontieren, was einen erheblichen Aufwand und Stillstandszeiten einer solchen Fördereinrichtung bedeutet. Bei den bisherigen Ketten war es nicht möglich, die einzelnen Achsen zu entfernen bzw. - wenn überhaupt - nur mit großem Aufwand.

Nach einer weiteren Variante ist das Revisionselement als Teil des einen Schienenabschnitts auf der einen Seite der Führungsvorrichtung ausgebildet, so dass nach Herausnehmen des Revisionselementes aus der Führungsvorrichtung wenigstens ein Kettenglied besonders unkompliziert und ohne die Notwendigkeit zum Lösen eines Abschnittes der Führungsvorrichtung über die volle Breite der Scharnierbandkette seitlich aus der Scharnierbandkette durch die Revisionsöffnung herausnehmbar ist.

Es bietet sich an, wenn an das Revisionselement direkt ein Abdeckungsabschnitt der seitlichen Abdeckung der Führungsvorrichtung angeordnet oder angeformt ist, um das Herausnehmen bzw. die Festlegung des Revisionselementes zu vereinfachen.

Zweckmäßig ist das Revisionselement dabei mittels einer Befestigungsvorrichtung wie Schrauben unkompliziert lösbar an der Führungsvorrichtung befestigbar.

Bezüglich des Scharnierbolzens bietet es sich ferner an, wenn der eine Funktionsvorsprung in einfachster Weise als Kopf an einem axialen Ende des Scharnierbolzens ausgebildet ist, der zum klemmenden Eingriff in eine Randvertiefung der Scharnieraugen ausgelegt ist.

Alternativ/optional kann der wenigstens eine Funktionsvorsprung aber auch als wenigstens ein radial vom Scharnierbolzen vorkragender Verriegelungszapfen ausgebildet sein, der zum Eingriff in eine korrespondierende Nut der Scharnieraugen ausgelegt ist.

Es ist auch denkbar, dass der Scharnierbolzen als Funktionsvorsprünge sowohl den Kopf und als auch wenigstens einen, vorzugsweise zwei, der Verriegelungszapfen aufweist und dass an den Scharnieraugen sowohl die Randvertiefung als auch wenigstens eine der Nuten ausgebildet ist. Durch diese besonders bevorzugte Variante ist es möglich, die Funktionen der Verriegelung des Scharnierbolzens in axialer Richtung und der Sicherung des Scharnierbolzens gegen Verdrehen in einfachster Weise voneinander zu trennen.

Besonders bevorzugt wird dabei parallel zur Randvertiefung an gegenüberliegenden Rändern des Scharnierauges jeweils eine der Nuten für einen Eingriff der Verriegelungszapfen ausgebildet sowie der Kopf des Scharnierbolzens asymmetrisch (z.B. exzentrisch zur Mittelachse) geformt.

Um eine einfache Montier- und Demontierbarkeit zu gewährleisten, kann der Kopf des Scharnierbolzens mit einer Betätigungskontur, vorzugsweise einem Schlitz, versehen sein. Diese Betätigungskontur kann ein Schlitz oder auch eine Mehrkantausnehmung sein, beispielsweise zum Ansetzen eines Schraubendrehers mittels Flachklinge oder entsprechendem Mehrkant-Werkzeug. Über den so ausgerüsteten Scharnierbolzen kann dieser für eine entsprechende Verriegelung auf einfachste Weise verschwenkt werden.

Zweckmäßig ist jedes Kettenglied im Bereich der Scharnieraugen und/oder der wenigstens eine Funktionsvorsprung der Scharnierbolzen elastisch derart verformbar, dass durch elastische Verformung des Scharnierauges und/oder des Funktionsvorsprunges der Funktionsvorsprung beim Drehen des Scharnierbolzens am Scharnierauge verriegelbar ist.

Nachfolgend wird die Erfindung anhand von Ausführungsbeispielen unter Bezug auf die Fig. näher beschrieben. Es zeigt:
- Fig. 1: eine Seitenansicht eines Kettengliedes einer Scharnierbandkette;
- Fig. 2: eine Draufsicht auf einen Abschnitt einer Scharnierbandkette mit mehreren Kettengliedern nach Art der Fig. 1;
- Fig. 3: eine Draufsicht auf den in eine Kurvenbahn gebogenen Abschnitt der Scharnierbandkette aus Fig. 2;
- Fig. 4: eine Unteransicht des in eine Kurvenbahn gebogenen Abschnitts der Scharnierbandkette aus Fig. 2;
- Fig. 5: eine perspektivische Ansicht des Kettengliedes aus Fig. 1;
- Fig. 6: eine perspektivische Ansicht eines Scharnierbolzens;
- Fig. 7: eine vergrößerte schematische Seitenansicht des Kettenglieds aus Fig. 1 und 5;
- Fig. 8: eine relativ zu Fig. 7 um 90° gedrehte weitere schematische Seitenansicht des Kettenglieds aus Fig. 1 und 5;
- Fig. 9-11: weitere Ansichten des Kettengliedes aus Fig. 1 und 5;
- Fig. 12: vier verschiedene, vergrößerte Darstellungen des Scharnierbolzens aus Fig. 6;
- Fig. 13: eine zu Fig. 7 analoge Darstellung mit Scharnierbolzen;
- Fig. 14: eine zu Fig. 8 analoge Darstellung mit Scharnierbolzen;
- Fig. 15: und 16 den Scharnierbolzen am Kettenglied in der endgültigen Montageposition,
- Fig. 17: einen Schnitt durch die Scharnierbandkette der Figur 1 nebst einem Schnitt durch einen hier funktionswesentlichen Bereich einer Führungsvorrichtung;
- Fig. 18: eine zu Figur 17 analoge Darstellung einer Scharnierbandkette mit Blick auf ein Kettenglied an einem besonderen Abschnitt der Schamierbandkette mit Revisionseinrichtung;
- Fig. 19: eine Queransicht der Führungsvorrichtung mit eingesetzter Scharnierbandkette;
- Fig. 20: das Revisionselement der Führungsvorrichtung aus Figur 18;
- Fig. 21: eine weitere Ansicht des Revisionselementes.

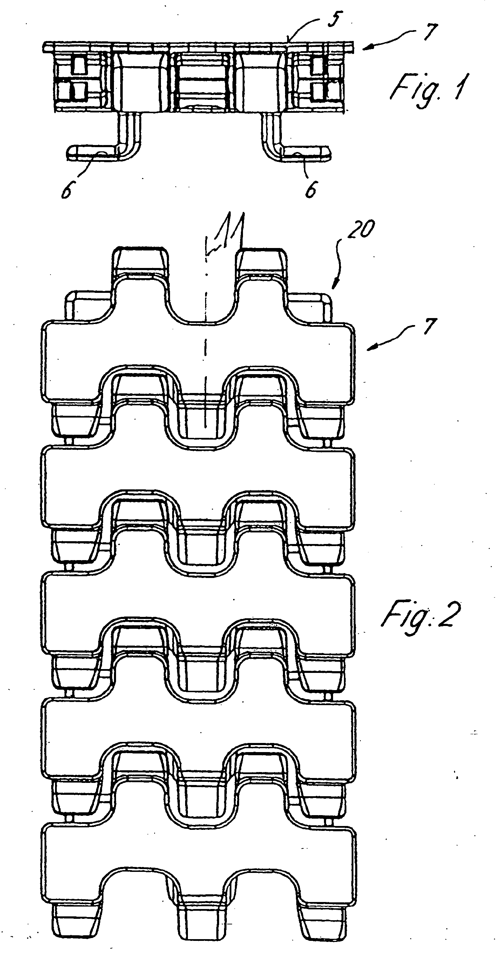

Die in Fig. 2 bis 4 dargestellte Scharnierbandkette 20 weist eine Mehrzahl aneinander gereihter Kettenglieder 7 auf. Fig. 1 zeigt dabei ein einzelnes Kettenglied 7 mit Blick in der Laufrichtung der Scharnierbandkette. Zu erkennen ist oberseitig eine Transportgutauflage 5, sowie an der Unterseite senkrecht zur Haupterstreckungsrichtung der Kette nach Fig. 2 nach außen ausgerichtete Scharnierausleger 6 (auch Taps genannt), die in entsprechenden hinterschnittenen (hier nicht dargestellten) Laufschienen das jeweilige Kettenglied führen, um ein Abheben des Kettengliedes 7 von der Führung zu vermeiden bzw. beim Überkopflauf des losen rückgeführten Trumms ein Durchhängen der Kette zu vermeiden.

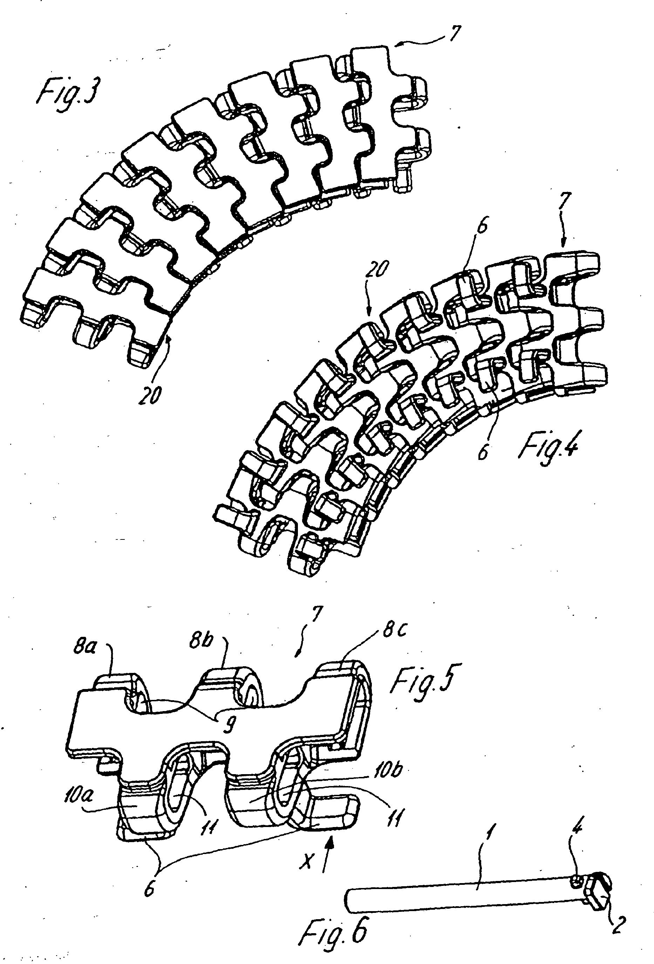

Nach Fig. 5 weist das Kettenglied 7 mehrere Scharnieraugen 8, 10 auf, welche nach unten hin an die Transportgutauflage angeformt sind. Es hat dabei zwei in Kettenrichtung zueinander versetzte Reihen der Scharnieraugen 8 und 10, welche jeweils auch senkrecht zur Anreihrichtung zueinander versetzt angeordnet sind, so dass beim Aneinanderreihen mehrerer Kettenglieder 7 die beiden Reihen von Scharnieraugen 8, 10 jeweils zahnartig mit etwas Spiel ineinander greifen, wobei eine genügende Beweglichkeit gegeben ist, um die Scharnierbandkette in eine Bogenform nach Art der Fig. 2 und 3 biegen zu können.

Die eine Reihe der Scharnieraugen muss wenigstens eines der Scharnieraugen 8 auf weisen und die andere Reihe wenigstens zwei der Scharnieraugen 10, zwischen welche das einzelne Scharnierauge 8 eingreift.

Nach Fig. 5 sind in der einen Reihe drei Scharnieraugen 8a,b, c vorgesehen und in der anderen Reihe zwei Scharnieraugen 10a, b, welche zwischen die drei Scharnieraugen 8 der anderen Reihe greifen.

Die Scharnieraugen 8 und 10 beider Reihen sind jeweils mit Langlochausnehmungen 9 versehen und stehe jeweils in Kettenrichtung über den seitlichen Rand der Transportgutauflagen 5 vor, so dass im zusammengereihten Zustand die Langlochausnehmungen 9 der ineinander greifenden Scharnieraugen 8, 10 benachbarten Kettenglieder 7 wenigstens derart miteinander fluchten, dass durch sie senkrecht zur Kettenrichtung ein sichernder und verbindender Scharnierbolzen 1 nach Art der Fig. 6 führbar ist.

An den Scharnieraugen 10a, 10b der einen Reihe sind jeweils die Scharnierausleger (Taps) 6 angeordnet. Die äußeren der drei Scharnieraugen 8 der weiteren Reihe von Scharnieraugen weisen darüber hinaus außen Randverbreiterungen auf, welche zur Aufnahme eines Kopfes 2 eines Scharnierbolzens 1 dienen, was nachfolgend unter Bezug auf die weiteren Fig. noch näher erläutert werden wird.

Nach Fig. 6 weist jeder Scharnierbolzen 1 an einer Seiten einen Kopf 2 auf sowie Verriegelungszapfen 4, welche sich von dem Scharnierbolzen 1 hier an gegenüberliegenden Stellen des Scharnierbolzens von diesem radial nach außen erstrecken und die neben (um einige mm versetzt) dem Kopf 2 angeordnet sind.

Der Kopf 2 des Scharnierbolzens 1 weist eine Breite auf, die der Langlochbreite der Langlochausnehmung 9 plus der Tiefe der Randvertiefung 12 entspricht, so dass dieser verdrehsicher in der Randvertiefung 12 des jeweiligen Scharnierauges 8a oder 8c geführt ist, in das er eingesteckt wurde. Da der Kopf 2 im wesentlichen eine Rechteckform aufweist (genauer betrachtet ist er hier zu einer radialen Seiten hin eher rund und zur anderen gegenüberliegenden Seite eher rechteckig geformt, wobei der Kopf auch etwas exzentrisch zur Achse des Scharnierbolzens 1 ausgerichtet ist), muss beim Drehen des Scharnierbolzens 1 eine elastische Verformung des jeweils außenliegenden Scharnierauges 8 erfolgen. Da die Kettenglieder 7 aus Kunststoff gespritzt sind, erfolgt dieses im elastischen Bereich, den das Material zulässt. Auch bei metallischen Werkstoffen für die Kettenglieder 7 ist der Kopf entsprechend seiner Außenform und Maße so zu dimensionieren, dass die Überfederung des Materials ausschließlich im elastischen Bereich erfolgt. Die Rückstellkräfte sind ohnehin bei metallischen Werkstoffen größer anzusetzen als bei Materialien wie Kunststoff usw.; so dass die elastische Federung gering gehalten werden kann.

Nach Fig. 13 durchsetzt der Scharnierbolzen 1 die Langlochausnehmungen 9, wobei er derart eingeführt wird, dass die Verriegelungszapfen 4 in Längsrichtung der Langlochausnehmung 9 stehen, bis der asymmetrische Kopf (der in einer Richtung breiter ist als in der anderen) in die Randvertiefung 12 eingreift, da er asymmetrisch in diesem besonderen Fall an den Scharnierbolzen 1 angeschlossen ist. Bei entsprechender anderer konstruktiven Ausgestaltung kann der Scharnierbolzenkopf 2 auch eine zentrische Lage zum Scharnierbolzen 1 einnehmen.

Parallel zur Randvertiefung 12 ist an gegenüberliegenden Rändern des Scharnierauges jeweils eine Nut 13, 14 ausgebildet, welche für einen Eingriff der Verriegelungszapfen 4 ausgelegt ist.

Da der Kopf des Scharnierbolzens 1 mit einer Betätigungskontur, hier ein Schlitz 3, versehen ist, kann auf einfache Weise durch Drehen des Scharnierbolzens um 90° mittels eines Werkzeuges, z.B. eines Schraubendrehers, das in den Schlitz 3 greift, in seine Verriegelungsstellung innerhalb des Kettengliedes 7 gedreht werden. Dabei greifen die Verriegelungszapfen 4 in die entsprechenden Nuten 13 und 14 und verriegeln damit den Scharnierbolzen axial, während der Kopf 2 in der Randvertiefung 9 festgeklemmt ist und ein unbeabsichtigtes Verdrehen verhindert.

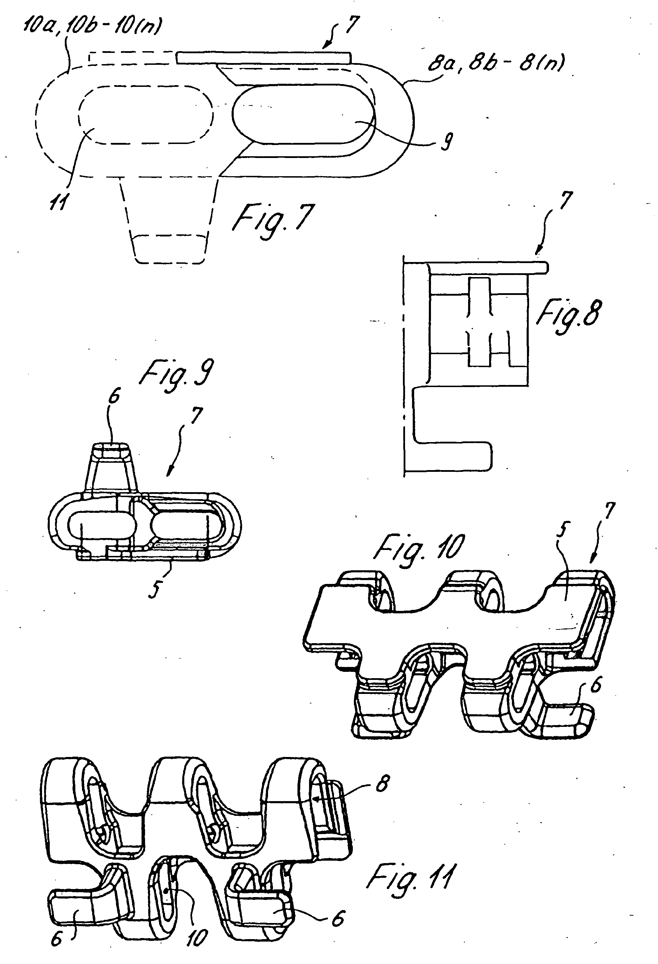

Figur 7 zeigt in vergrößerter Darstellung die Seitenansicht des Kettengliedes 7, dem die Langlochausnehmungen 9 und 11 gut zu entnehmen sind.

Figur 8 zeigt eine Teilansicht aus der Sichtrichtung "x" siehe Figur 5 in das innere des außenliegenden Scharnierauges 8a bzw. 8c bzw. 8n. Hier ist die Aufnahmesituation sowohl für den Kopf 2 und die Verriegelungszapfen 4 für den Scharnierbolzen gut zu erkennen.

Die Figur 9 zeigt eine Seitenansicht des Kettengliedes 7 und entspricht im Wesentlichen der vergrößerten Figur 7.

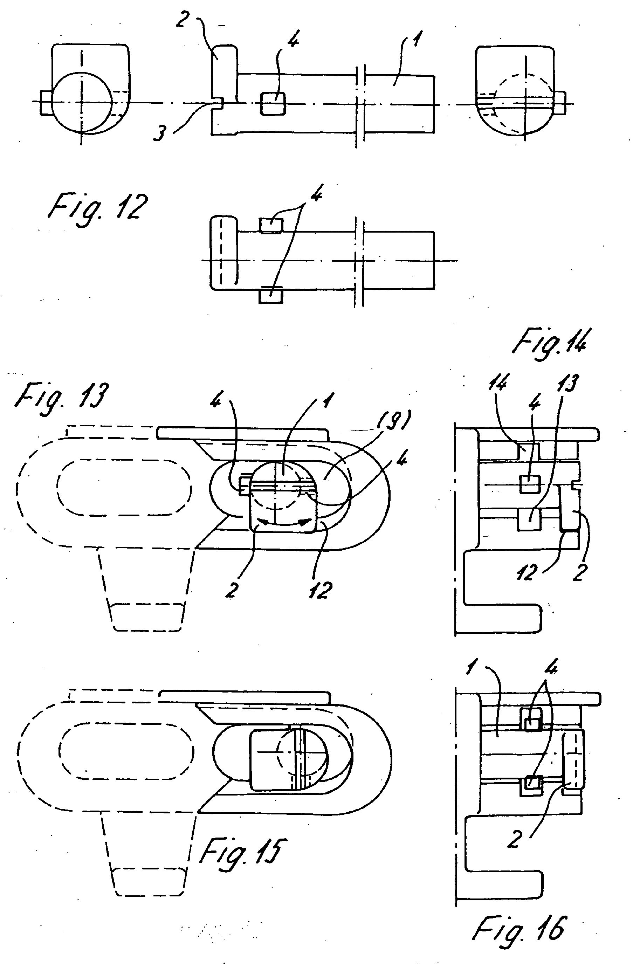

Die Figur 10 zeigt perspektivisch das Kettenglied 7 in der Draufsicht auf die Transportgutauflage 5 und entspricht der zuvor bereits beschriebenen Figur 5. Die Figur 11 zeigt das Transportkettenglied 7 von der Unterseite mit Blick auf die Scharnierausleger 6. Figur 12 zeigt den besonders gestalteten Scharnierbolzen in seinen vier um 90° geklappten Ansichten.

Die Figur 2 zeigt eine Anzahl von ineinander greifenden Kettengliedern 7 in der Draufsicht auf die Transportgutauflageebene. Die einzelnen Kettenglieder 7 greifen hier einander gegenüberliegend ineinander. Die Kettenglieder 7 weisen dabei jeweils in ihrer einen Reihe der Scharnieraugen 8 jeweils ein Scharnierauge mehr auf als in der anderen Reihe von Scharnieraugen 10.

Die Figur 3 zeigt eine Draufsicht auf mehrere zusammengesetzte Kettenglieder 7, wobei diese entsprechend dem maximalen Radius, der sich aus der Langlochlänge im Scharnierauge und der Scharnierbandbreite ergibt, eine Kurve beschreiben.

Die Figur 4 zeigt ebenfalls eine zusammengesetzte Anzahl von Kettengliedern, bei maximalem Umlenkradius von der Unterseite.

In der Figur 15 ist die endgültige Montagelage des Scharnierbolzens gezeigt, wobei der Scharnierbolzen im Betrieb mit anderen Kettengliedern ohnehin bildlich nach rechts verschoben wird und im Endradius des Langloches 9 zur Anlage kommt.

Die Figur 16 zeigt den Scharnierbolzen 1 ebenfalls in seiner endgültigen Montageposition, in der er sich entlang des Langloches bewegen kann. Hier ist zu erkennen, dass die Verrieglungszapfen 4 in die Nuten 13 und 14 eingreifen und damit die axiale Lage des Scharnierbolzens 1 sichern. Dem Kopf 2 kommt dabei lediglich die Aufgabe zu, den Scharnierbolzen gegen Verdrehen zu sichern, was dieser durch entsprechenden losen Formschluss im entsprechenden Scharnierauge 8 realisiert.

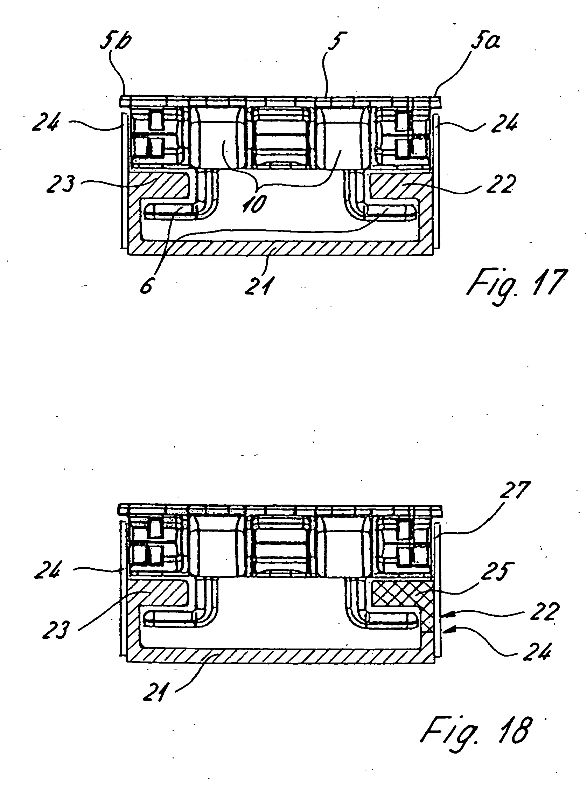

Nach Figur 17 erstrecken sich die Scharnierausleger 6 wie in Fig. 1 an der Unterseite der Scharnierbandkette senkrecht zur Haupterstreckungsrichtung der Kette - von der Mittelachse 11 nach Figur 2 aus betrachtet - nach außen. Sie sind an die Schamieraugen 10a und 10b der einen Reihe von Scharnieraugen angeformt, und zwar bevorzugt an die Reihe von Scharnieraugen 10, in welcher sich die Scharnieraugen nicht ganz bis an den Außenrand der Kette erstrecken, sondern an jeweils eine Scharnieraugenbreite nach innen versetzt enden, um zwischen die Scharnieraugen 8 der anderen Scharnieraugenreihe einzugreifen.

Die beiden nach außen zeigenden Führungsausleger 6 jedes Kettengliedes 7 erstrecken sich nach Fig. 17 unterhalb der Transportgutauflage 5 bis kurz vor den äußeren Rand der weiteren Scharnieraugen 8a und 8c der anderen Reihe der Scharnieraugen 8, wo sie jeweils in eine schienenartige Führungsvorrichtung 21 eingreifen, die zwei senkrecht nach innen gerichtete Schienenabschnitte 22, 23 aufweist, welche die Führungsausleger 6 jeweils hintergreifen. Gut zu erkennen ist in Figur 17 der im wesentlichen "C-förmige" Querschnitt der Kettenführung 21.

Die Transportgutauflage 5 erstreckt sich dabei mindestens bis an den äußeren Rand der Schienenabschnitte 22 und 23 oder bevorzugt sogar jeweils seitlich um ein kurzes Stück, z.B. einige Millimeter, über den äußeren Rand der Schienenabschnitte 22, 23 hinaus, so daß die Möglichkeit dazu besteht, seitlich an der Führungsvorrichtung 21 jeweils eine Kettenabdeckung 24 anzuordnen. Dies hat zunächst den Vorteil, daß auf einfache Weise durch die Kettenabdeckung 24 die Scharnierbandkette und auch die Führungsvorrichtung von der Seite her gegen ein Eindringen von Schmutz geschützt ist. Darüber hinaus bietet diese Maßnahme auch einen zusätzlichen Sicherheitsaspekt, da die Kettenabdeckungen 24 auch ein versehentliches Eingreifen in die Scharnierbandkette bei deren Bewegung im Betrieb verhindert.

Die beiden Kettenabdeckungen 24 können bandartig ausgelegt sein und die Schmierkette von der Seite her über ihre gesamte Länge abkapseln und knapp unter der seitlichen Verlängerung 5a, 5b der Transportgutauflage 5 enden.

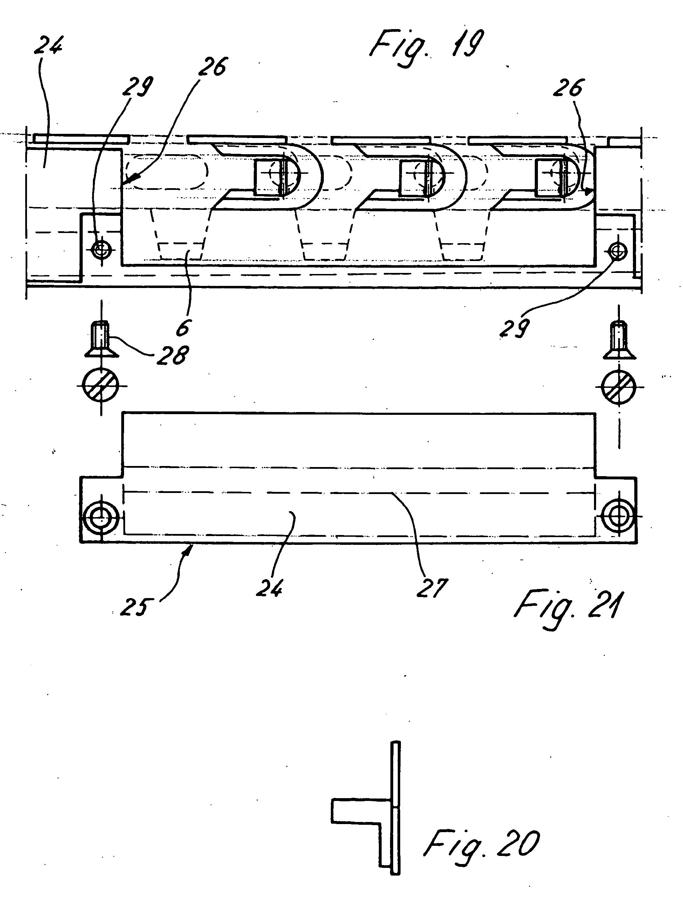

In Figur 18 ist die Führungsvorrichtung im Bereich der einen - hier des rechten - Schienenabschnitts 22 kreuzschraffiert dargestellt.

Diese Kreuzschraffur deutet schematisch die Ausbildung eines Revisionselementes 25 an, das auf einer bestimmten Länge aus der Schiene bzw. der Führungsvorrichtung 21 herausnehmbar ist, wobei es eine Revisionsöffnung 26 in der Kettenführung 21 freigibt, was in Fig. 19 zu erkennen ist. An dem herausnehmbaren Revisionselement 25 ist hier einstückig ein Abdeckungsabschnitt 27 der Abdeckung der Führungsvorrichtung angeordnet.

Figur 19 zeigt eine Queransicht der Ketten-Führungsvorrichtung 21 mit eingesetzter Scharnierbandkette. Die Figur zeigt die Situation, in der das Revisionselement 25 als Teil des Schienenabschnits 22 aus der Führungsvorrichtung 21 herausgenommen ist. Man erkennt deutlich, daß nunmehr ein Teil der einzelnen Kettenglieder mit den nach außen gerichteten Auslegern 6 frei liegt, so daß der Scharnierbolzen in einfacher Weise zur Seite hin entfernt werden kann. Dadurch, daß die hinten liegenden Scharnierausleger 6, von Sichtseite der Figur 19 aus gesehen, in die Kettenführung 21 eingreifen, ist auch gewährleistet, daß das jeweilige Kettenglied 7 auf einfachste Weise zur Seite hin aus der Kette herausnehmbar ist, beispielsweise, um die Kette zu verkürzen und um ein beschädigtes Kettenglied durch ein neues zu ersetzen.

Figur 21 zeigt eine weitere Ansicht des Revisionselementes 25 nebst seinem einstükkig angeformten Abdeckungsabschnitt 27, wobei diese Elemente hier eine Einheit bilden und über Schrauben 28 an Bohrungen 29 an Führungsvorrichtungen 21 anschraub- und damit befestigbar sind.

### Bezugszeichen

- Scharnierbolzen: 1
- Kopf: 2
- Schlitz: 3
- Verriegelungszapfen: 4
- Transportgutauflage: 5
- Scharnierausleger: 6
- Kettenglied: 7
- Scharnierauge: 8, 8a, 8b, 8c
- Langlochausnehmung: 9
- Scharnierauge: 10, 10a, 10b
- Mittelebene: 11
- Randvertiefung: 12
- Nut: 13
- Nut: 14
- Scharnierbohrung: 15
- Kettenglied: 16
- Verriegelungszapfen: 18
- Zunge: 19
- Scharnierbandkette: 20
- Führungsvorrichtung: 21
- Schienenabschnitte: 22, 23
- Kettenabdeckung: 24
- Revisionselement: 25
- Revisionsöffnung: 26
- Abdeckungsabschnitt: 27
- Schrauben: 28
- Bohrungen: 29

## Patentansprüche

1. Scharnierbandkette (20) mit Führungsvorrichtung (21),
a) wobei die Führungsvorrichtung (21) Schienenabschnitte (22, 23) aufweist,
b) wobei die Scharnierbandkette eine Mehrzahl aneinander gereihter, voneinander lösbarer Kettenglieder (7) aufweist, welche jeweils wenigstens zwei Reihen von im montierten Zustand ineinandergreifenden Scharnieraugen (8, 10) aufweisen, die im montierten Zustand in jeder Reihe jeweils miteinander fluchten,
c) wobei ferner die ineinandergreifenden Scharnieraugen (8, 10) der aneinandergereihten Kettenglieder (7) jeweils von Scharnierbolzen (1) durchsetzt sind, und
d) wobei an der Unterseite der Kettenglieder (7) jeweils Führungsausleger (6) angeordnet sind, welche in die Führungsvorrichtung (21) eingreifen,
**dadurch gekennzeichnet, dass**
e) die Scharnierbolzen (1) derart ausgebildet sind, dass sie durch Verdrehen in eine Verriegelungsstellung bringbar sind, in welcher die axiale Lage der Scharnierbolzen (1) in den Scharnieraugen (8, 10) und deren Drehposition fixiert ist und dass sie durch Rückdrehen aus der Verriegelungsstellung lösbar und dann aus den Kettengliedern entnehmbar sind, um die Kette zu demontieren.

2. Scharnierbandkette nach Anspruch 1, **dadurch gekennzeichnet, dass** die Scharnierbolzen (1) jeweils wenigstens einen Funktionsvorsprung (2, 4) aufweisen, welcher in einer ersten Drehstellung in axialer Richtung in eine korrespondierend ausgeformte Ausnehmung (12, 13, 14) an den Scharnieraugen (8a, 8c) einführbar und in einer zweiten Drehstellung in der Ausnehmung (12, 13, 14) axial verriegelbar ist.

3. Scharnierbandkette nach einem der vorstehenden Ansprüche, **dadurch gekennzeichnet, dass** der wenigstens eine Funktionsvorsprung als Kopf an einem axialen Ende des Scharnierbolzens (2) ausgebildet ist, der zum Eingriff in eine Randvertiefung der Scharnieraugen ausgelegt ist.

4. Scharnierbandkette nach einem der vorstehenden Ansprüche, **dadurch gekennzeichnet, dass** die Kettenglieder so ausgeführt sind, dass die Scharnierbolzen aus beiden axialen Richtungen einfahrbar und verriegelbar sind.

5. Scharnierbandkette nach einem der vorstehenden Ansprüche, **dadurch gekennzeichnet, dass** der wenigstens eine Funktionsvorsprung (2, 4) als radial vom Scharnierbolzen (1) vorkragender Verriegelungszapfen (4, 18) ausgebildet ist, welcher zum Eingriff in eine korrespondierende Nut (13, 14) der Scharnieraugen (8) ausgelegt ist.

6. Scharnierbandkette nach einem der vorstehenden Ansprüche, **dadurch gekennzeichnet, dass** der Scharnierbolzen (1) als Funktionsvorsprünge sowohl den Kopf (2) und als auch wenigstens einen, vorzugsweise zwei der Verriegelungszapfen (4, 18) aufweist und dass an den Scharnieraugen (8) sowohl die Randvertiefung (12) als auch wenigstens eine der Nuten (13, 14 ausgebildet ist.

7. Scharnierbandkette nach einem der vorstehenden Ansprüche, **dadurch gekennzeichnet, daß** die Führungsausleger (6) relativ zur Mittelsenkrechten (M) der Scharnierbandkette nach außen zeigen und nach innen weisende Schienenabschnitte (22, 23) der Führungsvorrichtung (21) hintergreifen.

8. Scharnierbandkette nach einem der vorstehenden Ansprüche, **dadurch gekennzeichnet, dass** die eine Reihe der Scharnieraugen (8, 10) wenigstens ein Scharnierauge (10) aufweist und dass die andere Reihe wenigstens zwei beabstandete Scharnieraugen (8) aufweist, in welche das einzelne Scharnierauge (10) eingreift.

9. Scharnierbandkette nach einem der vorstehenden Ansprüche, **dadurch gekennzeichnet, daß** jedes Kettenglied eine Transportgutauflage (5) aufweist, welche sich seitlich über die Führungsvorrichtung hinaus erstreckt und seitlich eine Abdeckung (24) an der Führungsvorrichtung überlappt, welche die Kettenglieder (7) seitlich abdeckt.

10. Scharnierbandkette nach einem der vorstehenden Ansprüche, **dadurch gekennzeichnet, daß** die Scharnierausleger (6) an die Scharnieraugen (10a und 1 0b) der einen Reihe von Scharnieraugen (10) angeformt sind, in welcher die äußeren Scharnieraugen jeweils eine Scharnieraugenbreite nach innen versetzt liegen und zwischen die Scharnieraugen (8) der anderen Scharnieraugenreihe eingreifen.

11. Scharnierbandkette nach einem der vorstehenden Ansprüche, **dadurch gekennzeichnet, daß** die Abdeckungen (24) bandartig ausgelegt sind und die Scharnierkette von der Seite her über ihre gesamte Länge abkapseln.

12. Scharnierbandkette nach einem der vorstehenden Ansprüche, **dadurch gekennzeichnet, daß** in der Führungsvorrichtung wenigstens ein Revisionselement (25) angeordnet ist, welches auf einer bestimmten Länge aus der Schiene bzw. der Führungsvorrichtung (21) herausnehmbar ist, um eine Revisionsöffnung (26) in der Führungsvorrichtung (21) freizugeben.

13. Scharnierbandkette nach einem der vorstehenden Ansprüche, **dadurch gekennzeichnet, daß** das Revisionselement (25) als Teil des einen Schienenabschnittes (22) der Führungsvorrichtung (21) ausgebildet ist, so dass nach Herausnehmen des Revisionselementes (25) aus der Führungsvorrichtung wenigstens ein Kettenglied (7) seitlich aus der Scharnierbandkette durch eine Revisionsöffnung (26) herausnehmbar ist.

14. Scharnierbandkette nach einem der vorstehenden Ansprüche, **dadurch gekennzeichnet, daß** an das Revisionselement (25) ein Abdeckungsabschnitt (27) der seitlichen Abdeckung (23, 24) der Führungsvorrichtung angeordnet oder angeformt ist.

15. Scharnierbandkette nach einem der vorstehenden Ansprüche, **dadurch gekennzeichnet, daß** das Revisionselement (25) mittels einer Befestigungsvorrichtung lösbar an der Führungsvorrichtung befestigbar ist.

## Claims

1. Flat-top chain (20) with guide arrangement (21),
a) in which the guide arrangement (21) has rail portions (22, 23),
b) in which the flat-top chain has a plurality of adjacent chain links (7) which can be released from one another and each have at least two rows of hinge eyelets (8, 10) which, in the assembled state, interengage and are aligned with one another in each row,
c) in which, furthermore, the interengaging hinge eyelets (8, 10) of the adjacent chain links (7) have hinge pins (1) passing through them in each case, and
d) in which guide extension arms (6), which engage in the guide arrangement (21), are arranged on the underside of the chain links (7) in each case,
**characterized in that**
e) the hinge pins (1) are designed such that they can be moved, by rotation, into a locking position, in which the axial position of the hinge pins (1) in the hinge eyelets (8, 10), and the rotary position thereof, is fixed, and **in that** they can be released from the locking position by being rotated in the opposite direction and can then be removed from the chain links, in order for the chain to be dismantled.

2. Flat-top chain according to Claim 1, **characterized in that** the hinge pins (1) each have at least one functional protrusion (2, 4) which, in a first rotary position, can be introduced axially into a correspondingly shaped recess (12, 13, 14) in the hinge eyelets (8a, 8c) and, in a second rotary position, can be locked axially in the recess (12, 13, 14) .

3. Flat-top chain according to one of the preceding claims, **characterized in that** the at least one functional protrusion is designed as a head at an axial end of the hinge pin (2) which is designed for engaging in a peripheral depression of the hinge eyelets.

4. Flat-top chain according to one of the preceding claims, **characterized in that** the chain links are configured such that the hinge pins can be introduced, and locked, from both axial directions.

5. Flat-top chain according to one of the preceding claims, **characterized in that** the at least one functional protrusion (2, 4) is designed as a locking stub (4, 18) which projects radially from the hinge pin (1) and is designed for engaging in a corresponding groove (13, 14) in the hinge eyelets (8).

6. Flat-top chain according to one of the preceding claims, **characterized in that** the hinge pin (1) has, as functional protrusions, both the head (2) and at least one, preferably two, of the locking stubs (4, 18), and **in that** both the peripheral depression (12) and at least one of the grooves (13, 14) are formed in the hinge eyelets (8).

7. Flat-top chain according to one of the preceding claims, **characterized in that** the guide extension arms (6) are oriented outwards relative to the mid-perpendicular (M) of the flat-top chain and engage behind inwardly oriented rail portions (22, 23) of the guide arrangement (21).

8. Flat-top chain according to one of the preceding claims, **characterized in that** the one row of hinge eyelets (8, 10) has at least one hinge eyelet (10), and **in that** the other row has at least two spaced-apart hinge eyelets (8), in which the individual hinge eyelet (10) engages.

9. Flat-top chain according to one of the preceding claims, **characterized in that** each chain link has an article-bearing means (5) which extends laterally beyond the guide arrangement and laterally overlaps a covering (24) on the guide arrangement, the chain links (7) being covered laterally by the covering.

10. Flat-top chain according to one of the preceding claims, **characterized in that** the hinge extension arms (6) are integrally formed on the hinge eyelets (10a and 10b) of the one row of hinge eyelets (10), in which the outer hinge eyelets are offset inwards in each case by the width of one hinge eyelet and engage between the hinge eyelets (8) of the other row of hinge eyelets.

11. Flat-top chain according to one of the preceding claims, **characterized in that** the coverings (24) are of strip-like design and encapsulate the chain, over its entire length, from the side.

12. Flat-top chain according to one of the preceding claims, **characterized in that** the guide arrangement contains at least one inspection element (25) which can be removed from the rail or the guide arrangement (21) over a certain length in order to release an inspection opening (26) in the guide arrangement (21).

13. Flat-top chain according to one of the preceding claims, **characterized in that** the inspection element (25) is designed as part of the one rail portion (22) of the guide arrangement (21), in which case, once the inspection element (25) has been removed from the guide arrangement, at least one chain link (7) can be removed laterally from the flat-top chain through an inspection opening (26).

14. Flat-top chain according to one of the preceding claims, **characterized in that** a covering portion (27) of the lateral covering (23, 24) of the guide arrangement is arranged, or integrally formed, on the inspection element (25).

15. Flat-top chain according to one of the preceding claims, **characterized in that** the inspection element (25) can be fastened in a releasable manner on the guide arrangement by means of a fastening arrangement.

## Revendications

1. Convoyeur à charnières (20) avec un dispositif de guidage (21), dans lequel
a) le dispositif de guidage (21) comporte des tronçons de rails (22, 23),
b) le convoyeur à charnières (20) comporte une pluralité de maillons (7), qui sont montés en ligne les uns contre les autres et sont aptes à être détachés les uns des autres et qui comportent chacun au moins deux rangées d'oeils de charnière (8, 10), qui s'engagent l'un dans l'autre à l'état monté et qui sont alignés les uns avec les autres dans chaque rangée à l'état monté,
c) les oeils de charnière (8, 10), s'engageant les uns dans les autres, des maillons (7) montés en ligne sont traversés chacun en outre par des axes de charnière (1), et
d) des bras de guidage (6), qui s'engagent dans le dispositif de guidage (21), sont agencés sur la face inférieure de chacun des maillons (7),
**caractérisé en ce que**
e) les axes de charnière (1) sont réalisés de telle sorte que, sous l'effet d'une rotation, ils peuvent être amenés dans une position de verrouillage, dans laquelle les axes de charnière (1) sont bloqués dans leur position axiale dans les oeils de charnière (8, 10) et dans leur position de rotation, et **en ce que**, sous l'effet d'une rotation inverse, il peuvent être débloqués hors de la position de verrouillage et peuvent alors être retirés hors des maillons en vue de démonter la chaîne.

2. Convoyeur à charnières selon la revendication 1, **caractérisé en ce que** les axes de charnière (1) comportent chacun au moins une saillie fonctionnelle (2, 4) qui, dans une première position de rotation, peut être introduite dans le sens axial dans un évidement (12, 13, 14), de forme correspondante, dans les oeils de charnière (8, 10) et, dans une deuxième position de rotation, peut être verrouillée dans le sens axial dans l'évidement (12, 13, 14).

3. Convoyeur à charnières selon l'une quelconque des revendications précédentes, **caractérisé en ce que** ladite au moins une saillie fonctionnelle est réalisée sous forme de tête sur une extrémité axiale de l'axe de charnière (1), laquelle est conçue pour s'engager dans une cavité marginale des oeils de charnière.

4. Convoyeur à charnières selon l'une quelconque des revendications précédentes, **caractérisé en ce que** les maillons sont réalisés de telle sorte que les axes de charnière peuvent être introduits à partir des deux directions axiales et être verrouillés.

5. Convoyeur à charnières selon l'une quelconque des revendications précédentes, **caractérisé en ce que** ladite au moins une saillie fonctionnelle (2, 4) est réalisée sous forme de téton de verrouillage (4, 18), qui forme saillie dans le sens radial sur l'axe de charnière (1) et est conçu pour s'engager dans une rainure (13, 14) correspondante des oeils de charnière (8).

6. Convoyeur à charnières selon l'une quelconque des revendications précédentes, **caractérisé en ce que** l'axe de charnière (1) comporte des saillies fonctionnelles formées par la tête (2) et également par au moins l'un, préférentiellement deux des tétons de verrouillage (4, 18), et **en ce que** sur les oeils de charnière (8) sont réalisées la cavité marginale (12) et au moins l'une des rainures (13, 14).

7. Convoyeur à charnières selon l'une quelconque des revendications précédentes, **caractérisé en ce que** les bras de guidage (6) sont dirigés vers l'extérieur par rapport à la verticale médiane (M) du convoyeur à charnières (20) et s'engagent derrière des tronçons de rail (22, 23) du dispositif de guidage (21), orientés vers l'intérieur.

8. Convoyeur à charnières selon l'une quelconque des revendications précédentes, **caractérisé en ce que** l'une des rangées d'oeils de charnière (8, 10) comporte au moins un oeil de charnière (10) et **en ce que** l'autre rangée comporte au moins deux oeils de charnière (8) écartés l'un de l'autre, entre lesquels s'engage l'oeil de charnière (10) isolé.

9. Convoyeur à charnières selon l'une quelconque des revendications précédentes, **caractérisé en ce que** chaque maillon comporte un support de transport (5), qui s'étend latéralement au-delà du dispositif de guidage et recouvre latéralement un cache (24) sur le dispositif de guidage, lequel couvre latéralement les maillons (7).

10. Convoyeur à charnières selon l'une quelconque des revendications précédentes, **caractérisé en ce que** les bras de guidage (6) sont formés contre les oeils de charnière (10a et 10b) de l'une des rangées d'oeils de charnière (10), dans laquelle les oeils de charnière extérieurs sont décalés chacun vers l'intérieur sur une distance égale à une largeur d'oeil et s'engagent entre les oeils de charnière (8) de l'autre rangée d'oeils de charnière.

11. Convoyeur à charnières selon l'une quelconque des revendications précédentes, **caractérisé en ce que** les caches (24) sont réalisés en forme de bande et masquent le côté du convoyeur à charnières sur toute sa longueur.

12. Convoyeur à charnières selon l'une quelconque des revendications précédentes, **caractérisé en ce que** le dispositif de guidage comporte au moins un élément de contrôle (25), qui peut être retiré hors du rail ou du dispositif de guidage (21) sur une longueur déterminée, afin de dégager une ouverture de contrôle (26) dans le dispositif de guidage (21).

13. Convoyeur à charnières selon l'une quelconque des revendications précédentes, **caractérisé en ce que** l'élément de contrôle (25) est réalisé sous la forme d'une partie de l'un des tronçons de rail (22) du dispositif de guidage (21), de telle sorte que, lorsque l'élément de contrôle (25) a été retiré hors du dispositif de guidage (21), au moins un maillon (7) peut être retiré latéralement hors du convoyeur à charnières (20) à travers l'ouverture de contrôle (26).

14. Convoyeur à charnières selon l'une quelconque des revendications précédentes, **caractérisé en ce que** sur l'élément de contrôle (25) est agencée ou formée une partie de recouvrement (27) du cache (23, 24) latéral du dispositif de guidage.

15. Convoyeur à charnières selon l'une quelconque des revendications précédentes, **caractérisé en ce que** l'élément de contrôle (25) peut être fixé de manière amovible contre le dispositif de guidage au moyen d'un dispositif de fixation.
